# EUROPEAN PATENT SPECIFICATION

(11) **EP 2 949 018 B1**
(45) Date of publication and mention of the grant of the patent: **27.12.2017**
(21) Application number: 13872404.2
(22) Date of filing: 25.01.2013
(51) Int. Cl.: H02H 9/00

(54) **ELECTROSTATIC ELIMINATION FROM A MOULD**
ELEKTROSTATISCHE ENTFERNUNG AUS EINER FORM
ÉLIMINATION ÉLECTROSTATIQUE D'UN MOULE

(43) Date of publication of application: 02.12.2015
(73) Proprietor: Suzhou Red Maple Wind Blade Mould Co., Ltd, Jiangsu 215400 (CN)
(72) Inventor: WANG, Xizhong, Taicang Jiangsu 215414 (CN); JIN, Xinggang, Taicang Jiangsu 215499 (CN); GAO, Yonghui, Taicang jiangsu 215400 (CN); SUN, Lulu, Suqian Jiangsu 223800 (CN); LU, Jialin, Taicang Jiangsu 215431 (CN)
(74) Representative: Jenkins, Peter David
(86) International application number: PCT/CN2013/070988
(87) International publication number: WO 2014/113970

(56) References cited:
- EP-A1- 2 468 470
- WO-A1-2009/084392
- WO-A1-2009/084392
- CN-A- 1 577 859
- CN-U- 202 267 725
- CN-U- 202 267 725
- JP-A- 2009 081 926

## Description

### Technical Field of the Invention

The present invention relates to an apparatus for, and a method of, eliminating electrostatic charge from a mould, in particular a wind turbine blade mould. The present invention particularly relates to such an apparatus and method which enable the elimination of electrostatic charge from a wind turbine blade mould during the wind blade production process. The apparatus and method have particular application to an electrically heated wind turbine blade mould.

### Technical Background of the Invention

With the development of science and technology, wind power as a safe and green renewable energy has developed rapidly. In recent years, the production technology of wind turbine blades has been continuously developed and improved. Current wind turbine blades typically have a length of more than 50 meters and are moulded out of fibre reinforced resin composite material.

Accordingly, exceedingly large moulds are required which have a mould surface corresponding to the dimensions of the wind blade to be moulded. During the moulding process, the resin is cured, and this generally requires the application of heat to the resin to ensure efficient and reliable curing of the resin. The heat is usually provided by electrically heated conductive filaments disposed beneath the moulding surface and coupled to a source of electrical power for selectively heating specific parts of the moulding surface to a desired temperature. A large electric heating zone of the mould occupies a large proportion of the entire wind turbine blade mould.

Large amounts of high-voltage electrostatic energy are generated during the blade demoulding process, and the electrostatic discharge would endanger site personnel safety and cause damage to the electrical components of the heating system.

The problem of electrostatic build up in a mould after cure of a composite material also occurs also in moulds without an electrical heating system, for example when the heat for curing is provided by a recirculating hot air oven. Furthermore, the problem of electrostatic build up in a mould also occurs in moulds for moulding articles other than wind blades, and in particular much smaller articles using vacuum assisted resin transfer moulding (VARTM). The problem of electrostatic build up in a mould is more likely when moulding a composite material comprising carbon fibres.

Examples of such problems are: personnel receiving an electric shock on removing consumable vacuum bags or touching the moulded part after demoulding; electrical fuses being blown by an electrical current induced back into the electrical heating system as the parts are demoulded; burning of printed circuit boards and other electronic components within the electronic control system; and an increased frequency of these events when moulding large carbon fibre parts. CN-U202267725 discloses a static discharge generator which comprises a power supply, a high voltage module, two charge-discharge circuits and a high voltage relay. By means of matching of the high voltage relay and the output ends of the two charge-discharge circuits, the static discharge polarity can be directly changed and output. EP-A-2468470 discloses a partitioned shell mould for wind turbine blades, the mould including air conduits for heated air. WO-A-2009/084392 discloses a moulding die apparatus in which an electrostatic attractive force is used to fill the die with resin.

### Aim of the Invention

In light of the problems with electrostatic charge in moulds, in particular large wind turbine blade moulds as discussed above, the present invention aims effectively to solve the problems of electrostatic discharge, and aims to provide an apparatus for and a method of eliminating high-voltage electrostatic charge during the composite material article production process, in particular the production of a wind turbine blade mould utilizing an electrically heated wind turbine blade mould.

### Summary of the Invention

The present invention accordingly provides an apparatus for eliminating electrostatic charge from a mould, the apparatus comprising heating wires within the mould for heating a zone of a moulding surface of the mould, an electrical power supply circuit connected to the heating wires, and an intermediate relay of an electrostatic elimination circuit connected between the heating wires and the electrical power supply circuit, the intermediate relay being switchable between a heating mode and a grounding mode so as selectively electrically to connect the heating wires to the electrical power supply circuit in the heating mode or to electrical earth in the grounding mode.

Preferably, the mould is a wind turbine blade mould.

Optionally, the apparatus further comprises a diverter switch on an output side of the electrical power supply circuit for switching the intermediate relay between the heating mode and the grounding mode.

Optionally, the relay includes an input live (L) power line and an input neutral (N) power line respectively interconnected by the relay to an output live (L) power line and an output neutral (N) power line which connect to the heating wires.

In one preferred embodiment, on at least one of the live (L) and neutral (N) power lines, the respective input power line connects to a heating supply relay switch which selectively connects to the respective output power line, and a ground line is connected to the respective output power line and selectively connected to earth (E) by a grounding relay switch, and the heating supply and grounding relay switches are configured so that when the heating supply relay switch is open, the grounding relay switch is closed and vice versa.

In another preferred embodiment, on both of the live (L) and neutral (N) power lines, the respective input power line connects to a heating supply relay switch which selectively connects to the respective output power line, and a ground line is connected to the respective output power line and selectively connected to earth (E) by a grounding relay switch, and the heating supply and grounding relay switches are configured so that when the heating supply relay switch is open, the grounding relay switch is closed and vice versa.

Optionally, the electrostatic elimination circuit includes an array of a plurality of parallel intermediate relays, each relay being electrically connected to a respective plurality of heating wires for heating a respective zone of the moulding surface.

Optionally, the heating wires are embedded wires from the moulding surface by a distance of from 2mm to 20mm.

Optionally, the electrostatic elimination circuit is located within the periphery of the mould.

The present invention further provides a method of eliminating electrostatic charge from a mould, the method comprising the steps of:
a. providing heating wires within the mould for heating a zone of a moulding surface of the mould, an electrical power supply circuit connected to the heating wires, and an intermediate relay of an electrostatic elimination circuit connected between the heating wires and the electrical power supply circuit, and
b. selectively switching the intermediate relay between a heating mode and a grounding mode so as selectively electrically to connect the heating wires to the electrical power supply circuit in the heating mode or to electrical earth in the grounding mode.

Preferably, the mould is a wind turbine blade mould.

Optionally, the intermediate relay is switched between the heating mode and the grounding mode by a diverter switch on an output side of the electrical power supply circuit.

Optionally, the relay includes an input live (L) power line and an input neutral (N) power line respectively interconnected by the relay to an output live (L) power line and an output neutral (N) power line which connect to the heating wires.

In one preferred embodiment, on at least one of the live (L) and neutral (N) power lines, the respective input power line connects to a heating supply relay switch which is selectively connected to the respective output power line, and a ground line is connected to the respective output power line and is selectively connected to earth (E) by a grounding relay switch, and the heating supply and grounding relay switches are configured so that when the heating supply relay switch is open, the grounding relay switch is closed and vice versa.

In another preferred embodiment, on both of the live (L) and neutral (N) power lines, the respective input power line connects to a heating supply relay switch which is selectively connected to the respective output power line, and a ground line is connected to the respective output power line and is selectively connected to earth (E) by a grounding relay switch, and the heating supply and grounding relay switches are configured so that when the heating supply relay switch is open, the grounding relay switch is closed and vice versa.

Optionally, the electrostatic elimination circuit includes an array of a plurality of parallel intermediate relays, each relay being electrically connected to a respective plurality of heating wires for heating a respective zone of the moulding surface.

Optionally, the heating wires are embedded wires from the moulding surface by a distance of from 2mm to 20mm.

Optionally, the electrostatic elimination circuit is located within the periphery of the mould.

Optionally, the intermediate relay is switched from the heating mode to the grounding mode prior to demoulding the moulded article from the mould.

The present invention further provides a method of eliminating electrostatic charge from a wind turbine blade mould using the apparatus of the present invention.

The present invention takes advantage of the existed heating wires, and additionally installs an intermediate relay between the heating wires and the heating electrical control circuit. Moreover, a two-position selection switch is used to control the status of the intermediate relay for the purpose of switching the electrical connection of the heating wires.

The two states of the intermediate relay respectively play two roles:
1) When the mould needs to be heated, the heating wires will be connected to the electrical control circuit and is electrified for heating.
2) When the mould needs to be demoulded, the heating wires will be connected to the grounding line of the electrical power system, so that the high-voltage electrostatic is conducted to the grounding line.

### Brief Description of the Drawings

Embodiements of the present invention will now be described by way of example only, with reference to the accompanying drawings, in which:
Figure 1 is an overall schematic diagram of a heating and electrostatic charge elimination and grounding circuit of a wind turbine blade mould according to an embodiment of the present invention.
Figure 2 is a schematic diagram of an array of intermediate relays in the heating and electrostatic charge elimination and grounding circuit of Figure 1.
Figure 3 is a schematic diagram of an intermediate relay and associated circuitry, the intermediate relay being comprised in the array shown in Figure 2.

### Detailed Description of the Preferred Embodiment

Referring to Figure 1, the wind turbine blade mould 2 is provided with a plurality of heating wires 4 embedded in the mould beneath the moulding surface. For clarity of illustration only some of the heating wires 4 are shown. The heating wires 4 are separated into a plurality of individual groups, each group being located for heating a particular zone of the wind turbine blade mould 2. The heating wires 4 shown in Figure 1 may be composed in a single group.

The heating wires 4 receive electrical power on a power line 6 of a power circuit. The power line 6 is connected to a heating control box 8 which receives an electrical power supply on line 10. An electrostatic discharge (ESD) line 12 exits the control box 6 and is connected to earth.

The heating wires 4 are preferably located close to the moulding surface of the mould 2 to provide an effective electrostatic leakage path from the moulding surface, for example the embedded wires being from 2mm to 20mm from the moulding surface.

Referring to Figure 2, a power circuit 14 in the heating box 8 includes a +DC power line 18 and a 0 Volt DC power line 24 which are connected to an electrostatic elimination circuit 16. A diverter switch 20 is on the +DC power line 18. The electrostatic elimination circuit 16 is connected to the power lines 18, 24. The electrostatic elimination circuit 16 includes an array of a plurality of parallel intermediate relays 26, designated R1, R2, R3, .... R18. Of course in other embodiments a larger or smaller number of relays 26 may be employed, and the number is selected based on the mould size and the number of heating zones.

Typically, the electrostatic elimination circuit 16 is located within the periphery of the wind turbine blade mould 2.

When the diverter switch 20 is switched on, relays R1∼R18 are energized and enter the heating mode.

Conversely, when the diverter switch 20 is switched off, relays R1 ∼ R18 are not energized and enter the electrostatic elimination mode.

Figure 3 shows as an example intermediate relay R1, and the structure and the function of the other intermediate relays R2 ∼ R18 is the same as for relay R1.

The relay 26 includes an input live (L) power line 30 and an input neutral (N) power line 32 respectively interconnected by the intermediate relay 26 to an output live (L) power line 38 and an output neutral (N) power line 46 which connect to the heating wires 4.

On the live (L) power side, the input line 30 from a portion 28 of the heating control box 8 connects to a first relay switch 36 which in turn selectively connects to the L output line 38, and a ground line 40 is connected to the L output power line 38 and selectively connected to earth (E) by a second relay switch 42. The first and second relay switches 36, 42 are configured so that when the first relay switch 36 is open (as illustrated), the second relay switch 42 is closed, and vice versa.

On the neutral (N) power side, the input line 32 connects to a third relay switch 44 which in turn selectively connects to the N output line 46, and a ground line 48 is connected to the N output line 46 and selectively connected to earth (E) by a fourth relay switch 50. The third and fourth relay switches 44, 50 are configured so that when the first relay switch 44 is open (as illustrated) the fourth relay switch 50 is closed, and vice versa.

When the intermediate relay 26 is energized, the first and third relay switches 36, 44 are switched on, and the second and fourth relay switches 42, 50 are switched off. The L output line 38 and N output line 46 are respectively turned on to power the heating wires 4. In this way, the output power of the heating control box 8 is loaded on to the heating wires 4, and the heating wires 4 in the respective zones of the wind blade mould 2 are selectively energized for heating.

Conversely, when the intermediate relay 26 is not energized, the first and third relay switches 36, 44 are switched off, and the second and fourth relay switches 42, 50 are switched on. The L output line 38 and N output line 46 are connected to earth E by the respective ground lines 40, 48. Therefore the heating wires 4 are directly connected to earth E, so that any high voltage electrostatic charge in the heating wires 4 and in the wind blade mould 2 flows to the earth through the intermediate relay 26, thereby protecting the electrical components of the electrical power and heating systems.

Accordingly the method of the invention switches the heating wires between a heating mode and a grounding mode by using an intermediate relay of an electrostatic elimination circuit between the heating wires and a power supply circuit for the heating wires.

The apparatus of the invention may be assembled by fitting an intermediate relay system to an existing heating control system, in particular by adding an intermediate relay between the heating wires and the heating control box.

Although the illustrated embodiment of the present invention employs a wind turbine blade mould, the present invention may be implemented in moulds for moulding other articles of composite material.

The present invention has particular application when the moulded article includes carbon fibres.

### Effects and Advantages of the Invention

Since electrostatic charge is generated in the article, e.g. a wind turbine blade, production process, particularly during the demoulding process, large amounts of high-voltage electrostatic discharge would endanger site personnel safety and cause damage to the electrical components of the heating system.

By utilizing the method of the present invention, when electrostatic charge is conducted by the heating wires, a full mould surface electrostatic shielding network forms, which helps to conduct electrostatic to the grounding line, and thereby effectively preventing the electrical components against damage. By the method of present invention, mould heating system downtime caused by high-voltage electrostatic charge is reduced from at least once fault per demoulding, prior to the implementation of the invention, to zero faults per demoulding. The present invention can therefore effectively reduce the electrical equipment failure frequency and maintenance cost.

## Claims

1. An apparatus for eliminating electrostatic charge from a mould (2), the apparatus comprising heating wires (4) within the mould (2) for heating a zone of a moulding surface of the mould (2), an electrical power supply circuit (14) connected to the heating wires (4), and an intermediate relay (26) of an electrostatic elimination circuit (16) connected between the heating wires (4) and the electrical power supply circuit (14), the intermediate relay (26) being switchable between a heating mode and a grounding mode so as selectively electrically to connect the heating wires (4) to the electrical power supply circuit (14) in the heating mode or to electrical earth in the grounding mode.

2. An apparatus according to claim 1 further comprising a diverter switch (20) on an output side of the electrical power supply circuit (14) for switching the intermediate relay (26) between the heating mode and the grounding mode.

3. An apparatus according to claim 1 or claim 2 wherein the relay (26) includes an input live (L) power line (30) and an input neutral (N) power line (32) respectively interconnected by the relay (26) to an output live (L) power line (38) and an output neutral (N) power line (46) which connect to the heating wires (4), optionally (i) wherein on at least one of the live (L) and neutral (N) power lines (30,32), the respective input power line (30,32) connects to a heating supply relay switch (36,44) which selectively connects to the respective output power line (38,46), and a ground line (40,48) is connected to the respective output power line (38,46) and selectively connected to earth (E) by a grounding relay switch (42,50), and the heating supply and grounding relay switches (36,44;42,50) are configured so that when the heating supply relay switch (36,44) is open, the grounding relay switch (42,50) is closed and vice versa; or (ii) wherein on both of the live (L) and neutral (N) power lines (30,32), the respective input power line (30,32) connects to a heating supply relay switch (36,44) which selectively connects to the respective output power line (38,46), and a ground line (40,48) is connected to the respective output power line (38,46) and selectively connected to earth (E) by a grounding relay switch (42,50), and the heating supply and grounding relay switches (36,44;42,50) are configured so that when the heating supply relay switch (36,44) is open, the grounding relay switch (42,50) is closed and vice versa.

4. An apparatus according to any one of claims 1 to 3 wherein the electrostatic elimination circuit (16) includes an array of a plurality of parallel intermediate relays (26), each relay (26) being electrically connected to a respective plurality of heating wires (4) for heating a respective zone of the moulding surface.

5. An apparatus according to any one of claims 1 to 4 wherein the heating wires (4) are embedded wires from the moulding surface by a distance of from 2mm to 20mm.

6. An apparatus according to any one of claims 1 to 5 wherein the mould (2) is a wind turbine blade mould.

7. An apparatus according to any one of claims 1 to 6 wherein the electrostatic elimination circuit (16) is located within the periphery of the mould (2).

8. A method of eliminating electrostatic charge from a mould (2), the method comprising the steps of:
a. providing heating wires (4) within the mould (2) for heating a zone of a moulding surface of the mould (2), an electrical power supply circuit (14) connected to the heating wires (4), and an intermediate relay (26) of an electrostatic elimination circuit (16) connected between the heating wires (4) and the electrical power supply circuit (14), and
b. selectively switching the intermediate relay (26) between a heating mode and a grounding mode so as selectively electrically to connect the heating wires (4) to the electrical power supply circuit (14) in the heating mode or to electrical earth in the grounding mode.

9. A method according to claim 8 wherein the intermediate relay (26) is switched between the heating mode and the grounding mode by a diverter switch (20) on an output side of the electrical power supply circuit (14).

10. A method according to claim 8 or claim 9 wherein the relay (26) includes an input live (L) power line (30) and an input neutral (N) power line (32) respectively interconnected by the relay (26) to an output live (L) power line (38) and an output neutral (N) power line (46) which connect to the heating wires (4), optionally (i) wherein on at least one of the live (L) and neutral (N) power lines (30,32), the respective input power line (30,32) connects to a heating supply relay switch (36,44) which is selectively connected to the respective output power line (38,46), and a ground line (40,48) is connected to the respective output power line (38,46) and is selectively connected to earth (E) by a grounding relay switch (42,50), and the heating supply and grounding relay switches (36,44;42,50) are configured so that when the heating supply relay switch (36,44) is open, the grounding relay switch (42,50) is closed and vice versa, or (ii) wherein on both of the live (L) and neutral (N) power lines (30,32), the respective input power line (30,32) connects to a heating supply relay switch (36,44) which is selectively connected to the respective output power line (38,46), and a ground line (40,48) is connected to the respective output power line (38,46) and is selectively connected to earth (E) by a grounding relay switch (42,50), and the heating supply and grounding relay switches (36,44;42,50) are configured so that when the heating supply relay switch (36,44) is open, the grounding relay switch (42,50) is closed and vice versa.

11. A method according to any one of claims 8 to 10 wherein the electrostatic elimination circuit (16) includes an array of a plurality of parallel intermediate relays (26), each relay (26) being electrically connected to a respective plurality of heating wires (4) for heating a respective zone of the moulding surface.

12. A method according to any one of claims 8 to 11 wherein the heating wires (4) are embedded wires from the moulding surface by a distance of from 2mm to 20mm.

13. A method according to any one of claims 8 to 12 wherein the mould (2) is a wind turbine blade mould.

14. A method according to any one of claims 8 to 13 wherein the electrostatic elimination circuit (16) is located within the periphery of the mould (2).

15. A method according to any one of claims 8 to 14 wherein the intermediate relay (26) is switched from the heating mode to the grounding mode prior to demoulding the moulded article from the mould (2).

## Patentansprüche

1. Vorrichtung zum Entfernen von elektrostatischer Ladung von einer Form (2), wobei die Vorrichtung Folgendes umfasst: Heizdrähte 84) in der Form (2) zum Erhitzen einer Zone einer Formoberfläche der Form (2), einen mit den Heizdrähten (4) verbundenen Stromversorgungskreislauf (14) und ein Zwischenrelais (26) eines elektrostatischen Entfernungsschaltkreises (16), verbunden zwischen den Heizdrähten (4) und dem Stromversorgungsschaltkreis (14), wobei das Zwischenrelais (26) zwischen einem Heizmodus und einem Erdungsmodus geschaltet werden kann, um die Heizdrähte (4) selektiv elektrisch mit dem Stromversorgungskreislauf (14) im Heizmodus oder mit elektrischer Erde im Erdungsmodus zu verbinden.

2. Vorrichtung nach Anspruch 1, die ferner einen Umschalter (20) auf einer Ausgangsseite des Stromversorgungskreislaufs (14) zum Schalten des Zwischenrelais (26) zwischen dem Heizmodus und dem Erdungsmodus umfasst.

3. Vorrichtung nach Anspruch 1 oder Anspruch 2, wobei das Relais (26) eine stromführende (L) Eingangsstromleitung (30) und eine neutrale (N) Eingangsstromleitung (32) umfasst, die jeweils durch das Relais (26) mit einer stromführenden (L) Ausgangsstromleitung (38) und einer neutralen (N) Ausgangsstromleitung (46) verbunden sind, die mit den Heizdrähten (4) verbunden sind, wobei optional (i) auf der stromführenden (L) und/oder der neutralen (N) Stromleitung (30, 32) die jeweilige Eingangsstromleitung (30, 32) mit einem Wärmezufuhrrelaisschalter (36, 44) verbunden ist, der selektiv mit der jeweiligen Ausgangsstromleitung (38, 46) verbunden wird, und eine Masseleitung (40, 48) mit der jeweiligen Ausgangsstromleitung (38, 46) verbunden ist und durch einen Erdungsrelaisschalter (42, 50) selektiv mit Erde (E) verbunden wird, und der Wärmezufuhr- und Erdungsrelaisschalter (36, 44; 42, 50) so konfiguriert sind, dass, wenn der Wärmezufuhrrelaisschalter (36, 44) offen ist, der Erdungsrelaisschalter (42, 50) geschlossen ist und umgekehrt; oder (ii) wobei sowohl auf der stromführenden (L) als auch auf der neutralen (N) Stromleitung (30, 32) die jeweilige Eingangsstromleitung (30, 32) mit einem Wärmezufuhrrelaisschalter (36, 44) verbunden ist, der selektiv mit der jeweiligen Ausgangsstromleitung (38, 46) verbunden wird, und eine Masseleitung (40, 48) mit der jeweiligen Ausgangsstromleitung (38, 46) verbunden ist und durch einen Erdungsrelaisschalter (42, 50) selektiv mit Erde (E) verbunden wird, und der Wärmezufuhr- und Erdungsrelaisschalter (36, 44; 42, 50) so konfiguriert sind, dass, wenn der Wärmezufuhrrelaisschalter (36, 44) offen ist, der Erdungsrelaisschalter (42, 50) geschlossen ist und umgekehrt.

4. Vorrichtung nach einem der Ansprüche 1 bis 3, wobei der elektrostatische Entfernungsschaltkreis (16) eine Anordnung aus einer Mehrzahl von parallelen Zwischenrelais (26) beinhaltet, wobei jedes Relais (26) elektrisch mit einer jeweiligen Mehrzahl von Heizdrähten (4) zum Erhitzen einer jeweiligen Zone der Formoberfläche verbunden ist.

5. Vorrichtung nach einem der Ansprüche 1 bis 4, wobei die Heizdrähte (4) von der Formoberfläche um eine Distanz von 2 mm bis 20 mm eingebettete Drähte sind.

6. Vorrichtung nach einem der Ansprüche 1 bis 5, wobei die Form (2) die Form einer Windturbinenschaufel ist.

7. Vorrichtung nach einem der Ansprüche 1 bis 6, wobei sich der elektrostatische Entfernungsschaltkreis (16) in der Peripherie der Form (2) befindet.

8. Verfahren zum Entfernen von elektrostatischer Ladung von einer Form (2), wobei das Verfahren die folgenden Schritte beinhaltet:
a. Bereitstellen von Heizdrähten (4) in der Form (2) zum Erhitzen einer Zone einer Formoberfläche der Form (2), einen mit den Heizdrähten (4) verbundenen Stromversorgungsschaltkreis (14) und ein Zwischenrelais (26) eines elektrostatischen Entfernungsschaltkreises (16), der zwischen den Heizdrähten (4) und dem Stromversorgungsschaltkreis (14) verbunden ist, und
b. selektives Schalten des Zwischenrelais (26) zwischen einem Heizmodus und einem Erdungsmodus, um die Heizdrähte (4) selektiv elektrisch mit dem Stromversorgungsschaltkreis (14) im Heizmodus oder mit elektrischer Erde im Erdungsmodus zu verbinden.

9. Verfahren nach Anspruch 8, wobei das Zwischenrelais (26) zwischen dem Heizmodus und dem Erdungsmodus mit einem Umschalter (20) auf einer Ausgangsseite des Stromversorgungsschaltkreises (14) geschaltet wird.

10. Verfahren nach Anspruch 8 oder Anspruch 9, wobei das Relais (26) eine stromführende (L) Eingangsstromleitung (30) und eine neutrale (N) Eingangsstromleitung (32) aufweist, die jeweils durch das Relais (26) mit einer stromführenden (L) Ausgangsstromleitung (38) und einer neutralen (N) Ausgangsstromleitung (46) verbunden sind, die mit den Heizdrähten (4) verbunden sind, wobei optional (i) auf der stromführenden (L) und/oder der neutralen (N) Stromleitung (30, 32) die jeweilige Eingangsstromleitung (30, 32) mit einem Wärmezufuhrrelaisschalter (36, 44) verbunden ist, der selektiv mit der jeweiligen Ausgangsstromleitung (38, 46) verbunden wird, und eine Masseleitung (40, 48) mit der jeweiligen Ausgangsstromleitung (38, 46) verbunden ist und durch einen Erdungsrelaisschalter (42, 50) selektiv mit Erde (E) verbunden wird, und der Wärmezufuhr- und Erdungsrelaisschalter (36, 44; 42, 50) so konfiguriert sind, dass, wenn der Wärmezufuhrrelaisschalter (36, 44) offen ist, der Erdungsrelaisschalter (42, 50) geschlossen ist und umgekehrt, oder wobei (ii) sowohl auf der stromführenden (L) als auch auf der neutralen (N) Stromleitung (30, 32) die jeweilige Eingangsstromleitung (30, 32) mit einem Wärmezufuhrrelaisschalter (36, 44) verbunden ist, der selektiv mit der jeweiligen Ausgangsstromleitung (38, 46) verbunden wird, und eine Masseleitung (40, 48) mit der jeweiligen Ausgangsstromleitung (38, 46) verbunden ist und durch einen Erdungsrelaisschalter (42, 50) selektiv mit Erde (E) verbunden wird, und der Wärmezufuhr- und Erdungsrelaisschalter (36, 44; 42, 50) so konfiguriert sind, dass, wenn der Wärmezufuhrrelaisschalter (36, 44) offen ist, der Erdungsrelaisschalter (42, 50) geschlossen ist und umgekehrt.

11. Verfahren nach einem der Ansprüche 8 bis 10, wobei der elektrostatische Entfernungsschaltkreis (16) eine Anordnung aus einer Mehrzahl von parallelen Zwischenrelais (26) aufweist, wobei jedes Relais (26) elektrisch mit einer jeweiligen Mehrzahl von Heizdrähten (4) zum Erhitzen einer jeweiligen Zone der Formoberfläche verbunden ist.

12. Verfahren nach einem der Ansprüche 8 bis 11, wobei die Heizdrähte (4) von der Formoberfläche um eine Distanz von 2 mm bis 20 mm eingebettete Drähte sind.

13. Verfahren nach einem der Ansprüche 8 bis 12, wobei die Form (2) die Form einer Windturbinenschaufel ist.

14. Verfahren nach einem der Ansprüche 8 bis 13, wobei sich der elektrostatische Entfernungsschaltkreis (16) in der Peripherie der Form (2) befindet.

15. Verfahren nach einem der Ansprüche 8 bis 14, wobei das Zwischenrelais (26) vom Heizmodus in den Erdungsmodus vor dem Herausnehmen des geformten Artikels aus der Form (2) geschaltet wird.

## Revendications

1. Un appareil destiné à éliminer la charge électrostatique d'un moule (2), l'appareil comprenant des câbles de chauffage (4) dans le moule (2) afin de chauffer une zone d'une surface de moulage du moule (2), un circuit d'alimentation électrique (14) raccordé aux câbles de chauffage (4) et un relais intermédiaire (26) d'un circuit d'élimination électrostatique (16) raccordé entre les câbles de chauffage (4) et le circuit d'alimentation électrique (14), le relais intermédiaire (26) étant commutable entre un mode de chauffage et un mode de mise à la terre de façon à raccorder électriquement de manière sélective les câbles de chauffage (4) au circuit d'alimentation électrique (14) dans le mode de chauffage ou à la mise à la terre électrique dans le mode de mise à la terre.

2. Un appareil selon la revendication 1 comprenant en outre un commutateur de commutation (20) sur un côté de sortie du circuit d'alimentation électrique (14) pour commuter le relais intermédiaire (26) entre le mode de chauffage et le mode de mise à la terre.

3. Un appareil selon la revendication 1 ou la revendication 2 dans lequel le relais (26) inclut une ligne d'alimentation sous tension (L) d'entrée (30) et une ligne d'alimentation neutre (N) d'entrée (32) raccordées respectivement par le relais (26) à une ligne d'alimentation sous tension (L) de sortie (38) et à une ligne d'alimentation neutre (N) de sortie (46) qui se raccordent aux câbles de chauffage (4), en option
(i) dans lequel sur au moins une des lignes d'alimentation sous tension (L) et neutre (N) (30, 32), la ligne d'alimentation d'entrée respective (30, 32) se raccorde à un commutateur de relais d'alimentation du chauffage (36, 44) qui se raccorde de manière sélective à la ligne d'alimentation de sortie respective (38, 46), et une ligne de mise à la terre (40, 48) est raccordée à la ligne d'alimentation de sortie respective (38, 46) et raccordée de manière sélective à la terre (E) par un commutateur de relais de mise à la terre (42, 50), et les commutateurs des relais de mise à la terre et d'alimentation du chauffage (36, 44; 42, 50) sont configurés de telle sorte que lorsque le commutateur de relais d'alimentation du chauffage (36, 44) est ouvert, le commutateur de relais de mise à la terre (42, 50) est fermé et vice versa; ou
(ii) dans lequel sur les deux lignes d'alimentation sous tension (L) et neutre (N) (30, 32), la ligne d'alimentation d'entrée respective (30, 32) se raccorde à un commutateur de relais d'alimentation du chauffage (36, 44) qui se raccorde de manière sélective à la ligne d'alimentation de sortie respective (38, 46), et une ligne de mise à la terre (40, 48) est raccordée à la ligne d'alimentation de sortie respective (38, 46) et raccordée de manière sélective à la terre (E) par un commutateur de relais de mise à la terre (42, 50), et les commutateurs des relais de mise à la terre et d'alimentation du chauffage (36, 44; 42, 50) sont configurés de telle sorte que lorsque le commutateur de relais d'alimentation du chauffage (36, 44) est ouvert, le commutateur de relais de mise à la terre (42, 50) est fermé et vice versa.

4. Un appareil selon l'une quelconque des revendications 1 à 3 dans lequel le circuit d'élimination électrostatique (16) inclut un ensemble d'une pluralité de relais intermédiaires parallèles (26), chaque relais (26) étant raccordé électriquement à une pluralité respective de câbles de chauffage (4) afin de chauffer une zone respective de la surface de moulage.

5. Un appareil selon l'une quelconque des revendications 1 à 4 dans lequel les câbles de chauffage (4) sont des fils électriques intégrés éloignés de la surface de moulage par une distance comprise entre 2 mm et 20 mm.

6. Un procédé selon l'une quelconque des revendications 1 à 5 dans lequel le moule (2) est un moule de pale de turbine éolienne.

7. Un appareil selon l'une quelconque des revendications 1 à 6 dans lequel le circuit d'élimination électrostatique (16) est situé dans la périphérie du moule (2).

8. Un procédé d'élimination de charge électrostatique d'un moule (2), le procédé comprenant les étapes consistant à:
a. fournir des câbles de chauffage (4) dans le moule (2) afin de chauffer une zone d'une surface de moulage du moule (2), un circuit d'alimentation électrique (14) raccordé aux câbles de chauffage (4) et un relais intermédiaire (26) d'un circuit d'élimination électrostatique (16) raccordé entre les câbles de chauffage (4) et le circuit d'alimentation électrique (14), et
b. commuter de manière sélective le relais intermédiaire (26) entre un mode de chauffage et un mode de mise à la terre de façon à raccorder électriquement de manière sélective les câbles de chauffage (4) au circuit d'alimentation électrique (14) dans le mode de chauffage ou à la mise à la terre électrique dans le mode de mise à la terre.

9. Un procédé selon la revendication 8 dans lequel le relais intermédiaire (26) est commuté entre le mode de chauffage et le mode de mise à la terre par un commutateur de commutation (20) sur un côté de sortie du circuit d'alimentation électrique (14).

10. Un procédé selon la revendication 8 ou la revendication 9 dans lequel le relais (26) inclut une ligne d'alimentation sous tension (L) d'entrée (30) et une ligne d'alimentation neutre (N) d'entrée (32) raccordées respectivement par le relais (26) à une ligne d'alimentation sous tension (L) de sortie (38) et à une ligne d'alimentation neutre (N) de sortie (46) qui se raccordent aux câbles de chauffage (4), en option
(i) dans lequel sur au moins une des lignes d'alimentation sous tension (L) et neutre (N) (30, 32), la ligne d'alimentation d'entrée respective (30, 32) se raccorde à un commutateur de relais d'alimentation du chauffage (36, 44) qui est raccordée de manière sélective à la ligne d'alimentation de sortie respective (38, 46), et une ligne de mise à la terre (40, 48) est raccordée à la ligne d'alimentation de sortie respective (38, 46) et est raccordée de manière sélective à la terre (E) par un commutateur de relais de mise à la terre (42, 50), et les commutateurs de relais de mise à la terre et d'alimentation du chauffage (36, 44; 42, 50) sont configurés de telle sorte que lorsque le commutateur de relais d'alimentation du chauffage (36, 44) est ouvert, le commutateur de relais de mise à la terre (42, 50) est fermé et vice versa; ou
(ii) dans lequel sur les deux lignes d'alimentation sous tension (L) et neutre (N) (30, 32), la ligne d'alimentation d'entrée respective (30, 32) se raccorde à un commutateur de relais d'alimentation du chauffage (36, 44) qui est raccordé de manière sélective à la ligne d'alimentation de sortie respective (38, 46), et une ligne de mise à la terre (40, 48) est raccordée à la ligne d'alimentation de sortie respective (38, 46) et est raccordée de manière sélective à la terre (E) par un commutateur de relais de mise à la terre (42, 50), et les commutateurs des relais de mise à la terre et d'alimentation du chauffage (36, 44; 42, 50) sont configurés de telle sorte que lorsque le commutateur de relais d'alimentation du chauffage (36, 44) est ouvert, le commutateur de relais de mise à la terre (42, 50) est fermé et vice versa.

11. Un procédé selon l'une quelconque des revendications 8 à 10 dans lequel le circuit d'élimination électrostatique (16) inclut un ensemble d'une pluralité de relais intermédiaires parallèles (26), chaque relais étant raccordé électriquement à une pluralité respective de câbles de chauffage (4) afin de chauffer une zone respective de la surface de moulage.

12. Un procédé selon l'une quelconque des revendications 8 à 11 dans lequel les câbles de chauffage (4) sont des fils électriques intégrés éloignés de la surface de moulage par une distance comprise entre 2 mm et 20 mm.

13. Un procédé selon l'une quelconque des revendications 8 à 12 dans lequel le moule (2) est un moule de pale de turbine éolienne.

14. Un procédé selon l'une quelconque des revendications 1 à 13 dans lequel le circuit d'élimination électrostatique (16) est situé dans la périphérie du moule (2).

15. Un procédé selon l'une quelconque des revendications 8 à 14 dans lequel le relais intermédiaire (26) est commuté du mode de chauffage au mode de mise à la terre avant le démoulage de l'article moulé du moule (2).
